# EUROPEAN PATENT APPLICATION

(11) **EP 0 683 413 A1**
(43) Date of publication of application: **22.11.1995**
(21) Application number: 95201255.7
(22) Date of filing: 13.05.1995
(51) Int. Cl.: G02B 21/36

(54) **Camera attachment for a microscope**

(30) Priority: 17.05.1994 BE 9400501
(71) Applicant: CETI, naamloze vennootschap, B-2550 Kontich (BE)
(72) Inventor: Joossens, Florent, D-2800 Mechelen (BE)
(74) Representative: Donné, Eddy

(57) **Abstract**

Compact camera device for a microscope, characterized in that it consists of a cap (12) which can be placed directly on the ocular head (6) of a microscope (1), and a CCD camera (13) integrated in this cap (12), as well as a prism (14) integrated in this cap (12) which lead the optical image (8) of the microscope (1) via a folded optical path (15) to the CCD camera.

## Description

The present invention concerns a camera device for a microscope and a microscope equipped with such a camera device.

It is known that a microscope can be connected to a camera to record the image formed in the microscope and/or reproduce it directly on a TV-monitor.

This technique makes it among other things possible to repeatedly examine moving and non-moving microscope images at a later stage.

This technique is also often used for teaching purposes, as the image formed in the microscope can then be simultaneously looked at by several persons.

With the known camera devices the camera is directed with its objective downward in the extension of the camera output of the microscope. However, this technique has as a disadvantage that one or several extension pieces must be provided between the camera output and the objective of the camera, so that a high, unstable superstructure is created which must be placed on top of the microscope. Consequently, these known camera devices have several disadvantages.

A first disadvantage consists in that only a limited part of the microscope image is perceived by the camera, so that an overview of the entire image is excluded.

A second disadvantage consists in that said superstructure is little stable and that by touching the microscope and/or the above-mentioned superstructure, one causes the recorded image to be moved and shifted.

Another disadvantage consists in that said superstructure is complex and is easily damaged due its dimensions and slender form. Moreover, the superstructure is disadvantageous in that, when it is provided on a microscope, this microscope becomes significantly less stable.

Also, the invention aims a camera device for microscopes which excludes the above-mentioned disadvantages.

To this aim, the invention concerns a camera device, characterized in that it consists of a cap which can be placed directly on the ocular head of a microscope, and a CCD camera integrated in this cap as well as means integrated in this cap which lead the optical image of the microscope via an optical path to the CCD camera. As is known, CCD stands for Charge Coupled Device.

By making use of a CCD camera on the one hand, and by integrating it in a cap which can be placed directly on the ocular head of a microscope on the other hand, a very compact superstructure can be obtained, so that the above-mentioned disadvantages are excluded and/or minimized.

In order to optimize the compactness, use can be made of a broken path for the light beams of the formed image.

An optimum effect is obtained when the formed image is reflected over 180°, preferably by means of two reflections over 90°, so that the CCD camera can be positioned immediately next to the input of the camera device and so that the total height of the device is considerably restricted in relation to the known camera devices.

According to a variant, the compactness is optimized by making use of a CCD camera which is provided directly opposite and/or above the camera output of the microscope, preferably in combination with the use of an achromatic lens structure.

In order to better explain the characteristics of the invention, the following preferred embodiments are described, as an example only without being limitative in any way, with reference to the accompanying drawings, in which:
figure 1 represents a microscope which is equipped with a camera device according to the invention;
figure 2 represents the part which is indicated with F2 in figure 1 to a larger scale and as a section;
figures 3 and 4 show views according to arrows F3 and F4 in figure 2.
figure 5 shows a variant of a camera device according to the invention, which is provided on an ocular head of a microscope;
figure 6 shows the whole represented in figure 5 schematically as disassembled;
figure 7 shows a schematic section according to line VII-VII in figure 5.

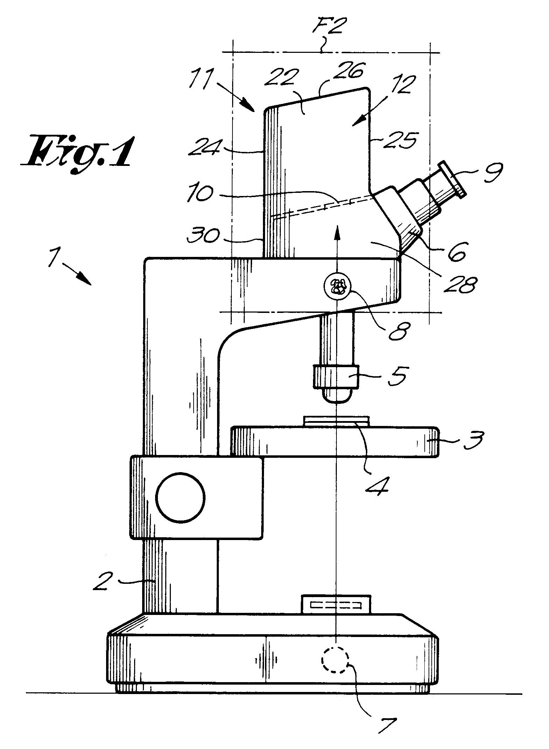

As represented in figure 1, a microscope 1 usually consists of a stand 2, a microscope stage 3 attached to this stand, where the object to be examined is usually held between glass plates 4, one or several objectives 5, a prism case 6 and possibly a light source 7, one and other such that an enlarged image 8 is formed of the object which is either or not illuminated.

Depending on the design of the microscope 1, this image 8 can be either observed via either one or two oculars 9, or by means of a camera via a camera output 10, or simultaneously in both ways, which is the reason why the above-mentioned head 6 is also called a trinocular head.

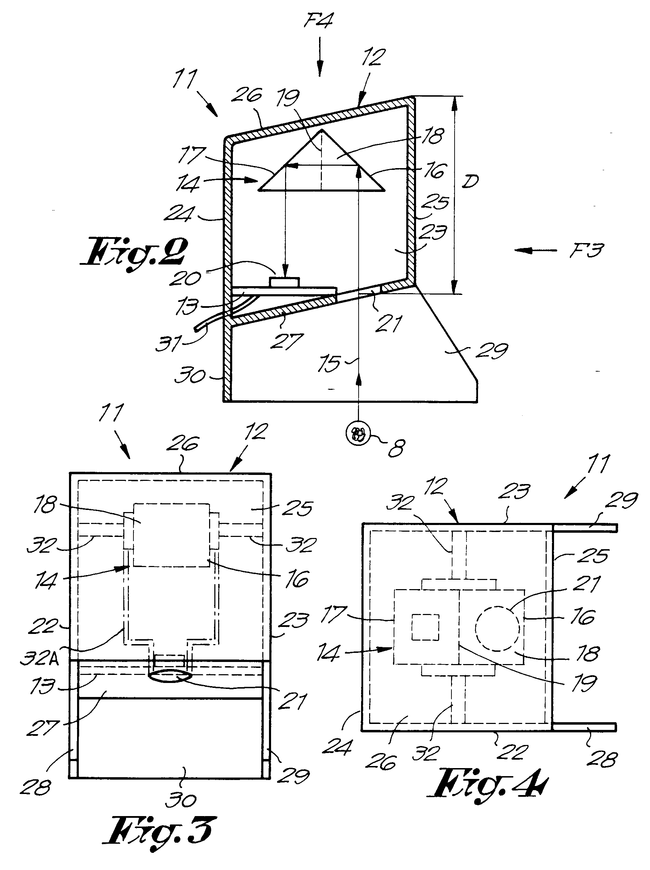

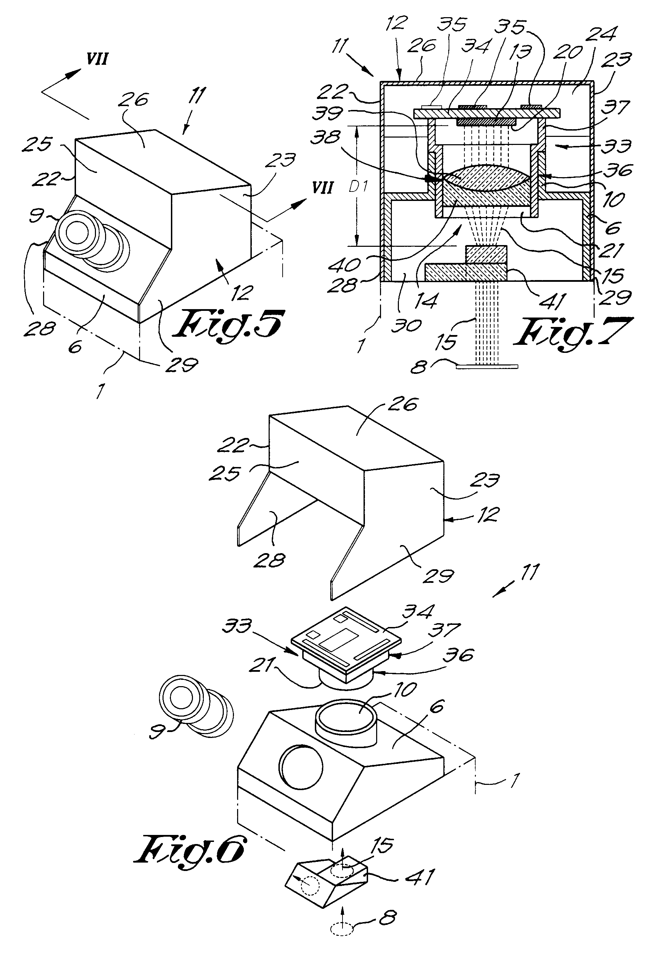

As represented in figures 1 to 4, the invention provides a very compact camera device 11 which can work in conjunction with the camera output 10 of a microscope 1.

To this aim, the camera device 11 consists of a cap 12 which can be placed on the microscope 1, at the height of the camera output 10, and of a CCD camera 13 integrated in this cap 12, as well as means 14 integrated in the cap 12 which lead the optical image 8 of the microscope 1 via an optical path 15 to the CCD camera 13.

In the embodiment of figures 1 to 4, use is made of a broken optical path 15.

Hereby, the beam of rays is preferably sent back over 180°, for example by means of two times a reflection over 90°, at reflection surfaces 16 and 17 respectively. For the guiding of the beam of rays according to the above-mentioned path 15, use is preferably made of one or several prisms. In the embodiment of figure 2, use is made of one prism 18. It is clear, however, that this prism 18 can also be composed of two prisms which are placed for example against one another according to the dashed line 19 which is indicated in the prism 18.

In this embodiment, the CCD camera 13 is directed with its sensitive side 20 opposite to the beam of rays coming out of the camera output 10. The sensitive side 20 is then normally directed upward.

In particular, the CCD camera 13 is preferably situated immediately next to the input 21 of the camera device 11, so as to maintain the parafocality between the camera and the microscope on the one hand, but limit the total height of the camera device 11 on the other hand.

When mounted on the microscope 1, the CCD camera 13 is preferably situated behind the input 21. In this way, the space around the oculars 9 remains free, as well as the places to the left and to the right of the microscope 1, so that the user is not disturbed by the camera device 11.

The cap 12, which functions among others as a seal, preferably consists of a housing which, to the exception of the input 21, is preferably entirely closed, so as to eliminate interfering light effects or penetrating dust. This housing is more or less rectangular and consists of two parallel side walls 22 and 23, a back wall 24, a front wall 25, a top wall 26 and possibly a base plate 27. The base plate 27 is not really necessary in case the housing is connected with its bottom side to the prism case, or in other words the ocular head 6 of the microscope 1.

The camera device 11 can be fixed to the microscope 1 in different manners.

Preferably, it is provided with fixing means which make it possible to mount the camera device 11 on existing microscopes 1.

Use can be made to this end of a number of flanges which make it possible to place the camera device 11 or at least the cap 12 on the prism case 6. In the example shown in figures 1 to 4, three flanges 28, 29 and 30 are provided which are in fact a continuation of the side walls 22 and 23 and the back wall 24, and which form a seating at the camera device 11 with which it can be placed in a stable manner on the microscope 1.

Preferably, the distance D between the input 21 and the top side of the camera device 11 is smaller than 80 mm.

It is clear that the camera device 11 will be provided with an electrical connection 31 to transmit the signal from the CCD camera 13 to the recorder, monitor or such like.

It is also clear that the different parts, in particular the CCD camera 13 and the prism 18, are mounted in the housing in a suitable manner, among others by means of supports 32 at the cap 12, or according to a variant on the existing ocular head 6 via a vertical supporting structure or such, which is represented in figure 3 as an axis 32A, and which can consist of a tubular holder which is not connected to the cap 12 and which can work in conjunction with the camera output 10.

The working of the camera device 11 can be easily derived from the figures.

The camera device 11 is first placed on the ocular head 6 and the connection is connected to a monitor or such like. The formed image 8 is then projected onto the CCD camera 13 via the indicated path 15, so that the image can be seen for example on the monitor. As the beam of rays is broken according to the indicated path 15, the total height of the device is limited and the disadvantages mentioned in the introduction are excluded and/or minimized.

It is clear that according to a variant, use could also be made of mirrors instead of of the prism 18.

It is also clear that the beam of rays can be sent back and forth several times by making use of several prisms or such like placed opposite to one another, so that the total height of the camera device 11 can be further restricted.

A variant of the camera device 11 according to the invention is shown in figures 5 to 7, whereby the CCD camera 13 is provided directly above the input 21.

As is shown in figures 6 and 7, use is preferably made to this end of a separate holder 33 which can work in conjunction with the camera output 10 of the ocular head 6 of a microscope 1 by means of a connecting piece and/or end part, for example can be pushed or screwed in it, on the one hand, and carries the PCB or printed circuit-board 34 upon which the actual CCD camera 13, i.e. the light-sensitive element, is provided together with the accompanying electronic components 35 on the other hand.

The holder 33 is tubular and for example has a lower cylindrical part 36 which is turned in a square top part 37. The printed circuit-board 34 is mounted directly on the top end of the holder 33, with the CCD camera 13 directed towards to the bottom.

As represented in figures 5 to 6, the whole is integrated in a cap 12 which can be placed on the ocular head 6, and which is preferably provided, analogous to the embodiment in figures 1 to 4, with fixing means consisting of flanges 28, 29 and 30. The cap 12 hereby offers a mechanical protection, as well as protection against dust and such. Moreover it provides, next to the holder 33, extra protection against interfering light effects from outside.

In order to obtain a very compact camera device 11, the above-mentioned means 14 in this embodiment mainly consist of an achromatic lens structure 38, for example with a flat convex form. In order to realize this form, use is preferably made for practical as well as economical reasons of the combination of a bi-convex lens 39 with a flat concave lens 40.

According to the invention, use is made in the most preferred embodiment of achromatic lenses 39-40 with a dioptre of +27. The lenses 39-40 make sure that the parafocality is maintained.

The distance D1 between the vee-block 41 and the CCD camera 13, in particular the CCD chip, is smaller than 60 mm according to the invention, and better still smaller than 50 mm, and in the most preferred embodiment it is 45 mm or about 45 mm.

Also in the embodiment of figures 5 to 7, the distance from the input 21 to the highest point of the cap 12 will be smaller than 80 mm. In particular, the entire height of the cap 12, including the flanges 28-29, is preferably maximally 85 mm.

According to the invention, an image output of 100% or almost 100% is further provided, by which is meant that the image reproduction reproduces the image which can be seen by means of the ocular or the oculars 9 for 100%. In the case of a round image 8, this means that the largest possible rectangle will be reproduced enlarged on the screen of the monitor.

The working and the use of the camera device 11 of figures 5 to 7 can be easily derived from figures 6 and 7. The image 8 is projected by means of the vee-block 41 to the ocular 9, or possibly to both oculars in the case where the microscope has two oculars, and to the camera output 10. Via the lenses 39 and 40, the image 8 ends up on the light-sensitive side of the CCD camera 13.

It should be noted that the lens structure 38 or prism 18 can possibly be fixed in an adjustable manner so as to allow for a focusing of the image projected on the CCD camera 13, or also that other focusing means can be provided to this end on the device 11.

It should be noted that by the cap is understood any form of housing which cooperates in a compact manner with the immediate vicinity of the camera output 10 of the microscope 1. If the design is slightly adjusted, also the tubular holder 33 can function as a "cap" as meant by the invention, whereby the cap indicated with the reference figure 12 can be omitted in this case.

Nor is it excluded to provide a lens structure 38 as mentioned above in the optical path of the embodiment of the figures 1 to 4.

The present invention is by no means limited to the embodiments described by way of example and represented in the accompanying drawings; on the contrary, such a camera device for a microscope can be made in various forms and dimensions while still remaining within the scope of the invention.

It is clear that the invention also concerns microscopes 1 which contain a camera device 11 according to the invention, whereby this camera device 11 is either or not fixed to the microscope or is either or not made in one piece with it.

## Claims

1. Camera device for a microscope, characterized in that it consists of a cap (12) which can be placed directly on the ocular head (6) of a microscope (1), and a CCD camera (13) integrated in this cap (12), as well as means (14) integrated in this cap (12) which lead the optical image (8) of the microscope (1) via an optical path (15) to the CCD camera.

2. Camera device according to claim 1, characterized in that the image (8) is led to the CCD camera (13) via a broken optical path (15).

3. Camera device according to claim 2, characterized in that the light beams of the image (8) between the input (21) of the camera device (11) and the CCD camera (13) are diverted over 180° and in that the CCD camera (13) is directed with its light-sensitive side (20) opposite to the beam of rays which enters the camera device (11) via the input (21).

4. Camera device according to claim 2 or 3, characterized in that the image (8) is reflected to the CCD camera (13) via at least one prism (18).

5. Camera device according to any of claims 2 to 4, characterized in that the CCD camera (13) is situated immediately next to the input (21), in particular behind this input (21), and in that it is directed with its sensitive side (20) upward.

6. Camera device according to claim 1, characterized in that the CCD camera (13) is provided immediately opposite to and/or above the input (21) of the camera device (11).

7. Camera device according to claim 6, characterized in that it is provided with a separate tubular holder (32A-33) which can cooperate, on the one hand, with the camera output (10) of the ocular head (6) of a microscope (1), and on the other hand carries a printed circuit-board (34) upon which the actual CCD camera (13) is provided, with said CCD camera (13) directed downwards.

8. Camera device according to claim 6 or 7, characterized in that the distance (D1) between the input (21) and the light-sensitive side (20) of the CCD camera (13) is smaller than 60 mm.

9. Camera device according to any of the preceding claims, characterized in that it is provided with a flat convex lens structure (38).

10. Camera device according to claim 9, characterized in that the flat convex lens structure (38) is composed of a biconvex lens (39) and a flat concave lens (40).

11. Camera device according to any of the preceding claims, characterized in that it is provided with a lens structure (38) which is composed of one or several achromatic lenses (39-40).

12. Camera device according to any of the preceding claims, characterized in that the image output is 100%.

13. Camera device according to any of the preceding claims, characterized in that the cap (12) is provided with flanges (28-29-30) which form a seating with which the cap (12) can be placed over the ocular head (6) of the microscope (1).

14. Camera device according to any of the preceding claims, characterized in that the distance (D) between the input (21) and the top side of the camera device (11) is smaller than 80 mm.

15. Camera device according to any of the preceding claims, characterized in that it is provided with focusing means to focus the image which is projected on the CCD camera (13).

16. Microscope, characterized in that it is provided with a camera device (11) according to any of claims 1 to 15.
